(19) Europäisches Patentamt
European Patent Office
Office européen des brevets

(11) **EP 4 742 108 A1**

(12) **EUROPEAN PATENT APPLICATION**

(43) Date of publication:
**13.05.2026 Bulletin 2026/20**

(21) Application number: **24211653.1**

(22) Date of filing: **08.11.2024**

(51) International Patent Classification (IPC):
***G06N 10/20*** (2022.01)   ***G06N 10/70*** (2022.01)

(52) Cooperative Patent Classification (CPC):
**G06N 10/70; G06N 10/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Fraunhofer-Gesellschaft zur Förderung
der angewandten Forschung e.V.
80686 München (DE)**

(72) Inventors:
• **Scheiber, Timon Florian
64285 Darmstadt (DE)**
• **Heller, Matthias
55118 Mainz (DE)**
• **Mueller-Roemer, Johannes S.
64807 Dieburg (DE)**

(74) Representative: **Ramrath, Lukas
Patentanwälte Bressel und Partner mbB
Potsdamer Platz 10
10785 Berlin (DE)**

(54) **A METHOD FOR NOISE-REDUCED SIGNAL PROCESSING BY A QUANTUM COMPUTING CIRCUIT AND A QUANTUM COMPUTER SYSTEM**

(57)     A method for noise-reduced signal processing by a quantum computing circuit and a quantum computer system

The invention relates to a method for noise-reduced signal processing by a quantum circuit having at least two quantum gates ($\tilde{U}_1, \tilde{U}_2, ..., \tilde{U}_L,$), comprising the steps of,
a) determining a fused inverse noise channel by propagating selected or all predetermined gate-specific inverse noise channels ($\Lambda_1^{-1}, \Lambda_2^{-1}, ..., \Lambda_L^{-1}$) to a predetermined circuit section of the quantum computing circuit (1) as a function of each noisy gate operation of the gates ($\tilde{U}_1, \tilde{U}_2, ..., \tilde{U}_L,$) between the gate-specific inverse noise channel ($\Lambda_1^{-1}, \Lambda_2^{-1}, ..., \Lambda_L^{-1}$) and the predetermined circuit section,
b) modifying the signal processing by the quantum computing circuit (1) by adding an additional quantum computing operation at the predetermined circuit section according to the fused inverse noise channel
and a quantum computer system.

Fig.4c

EP 4 742 108 A1

**Description**

The invention relates to a method for noise-reduced signal processing by a quantum circuit and a quantum computer system.

Quantum computing leverages quantum-mechanical principles to carry out computational and information processing tasks. Unlike classical computing, which relies on transistors to manipulate binary values (0 or 1), quantum computing utilizes quantum bits (qubits), which can exist in a superposition of both 0 and 1 simultaneously. This fundamental difference allows quantum computers to tackle problems that are either unsolvable or take an impractically long time to solve on traditional classical computers due to their computational complexity.

In particular, quantum computing is expected to outperform classical computing in specific use cases. However, most of the existing algorithms showing a rigorously proven superior scaling compared to classical algorithms are believed to lie beyond the reach of current noisy intermediate scale quantum (NISQ) computers and will probably become relevant only after fault-tolerance is achieved. While recently tremendous progress in the realization of error corrected qubits has been made, both in terms of efficient encodings and real hardware demonstrations, current quantum hardware is not necessarily fault-tolerant. As outlined above, the current generation of quantum hardware can access computational spaces, which might be out of reach even for advanced super computers. Since these devices are still bounded by noise, current NISQ-algorithms require aid by quantum error mitigation (QEM) schemes to be able to compete with classical solutions.

QEM methods mostly focus on quantum algorithms that aim to estimate an expectation value (O) of some observable O, by reducing the noise induced bias, at the cost of an increase in the variance of the estimate. This is e.g. described in the document R. Takagi et al., "Fundamental limits of quantum error mitigation", npj Quantum Information (2022)8:114, https://doi.org/10.1038/s41534-022-00619-z. One of such methods is the so-called probabilistic error cancellation (PEC) which is outlined e.g. in the document K. Temme et al. the document "Error mitigation for short-depth quantum circuits" IBM T.J. Watson Research Center, Yorktown Heights NY 10598 (Dated: November 7, 2017). The classical PEC aims to construct an ideal, noiseless circuit operation $\mathcal{U}(\rho)$ by expanding it into an (over-complete) basis of natively performable, noisy operations $\mathcal{O}_{i\ i}$, which can be directly executed by the hardware. This expansion can be achieved in two ways: Either by compensation, where each gate operation $\mathcal{U}_i$ of a circuit $\mathcal{U} = \mathcal{U}_n \cdots \mathcal{U}_0$ is directly replaced by the superimposed operation $\mathcal{U}_i = \Sigma_j\, n_j\, \mathcal{O}_j$ for some real coefficients $n_j$, or alternatively by inversion, where for each noisy operation $\tilde{\mathcal{U}}_i = \Lambda_i \circ \mathcal{U}_i$ inverse of the noise channel, $\Lambda_i^{-1} = \sum_j \eta'_j \mathcal{O}_j$ is implemented directly before or after $\Lambda_j$ to cancel the effect of the noise. This is e.g. described in the document Suguru Endo et al. "Practical Quantum Error Mitigation for Near-Future Applications", 1 Department of Materials, University of Oxford, Oxford OX1 3PH 2Graduate School of China Academy of Engineering Physics, Beijing 100193, China . The implementation of this decomposition is performed probabilistically by sampling from the linear combination with a probability respecting the weights $n_j$. This implementation performs the ideal operation on average but it generally comes at the cost of an increase in the variance of the desired result, often denoted by $\gamma$. The latter method has recently been demonstrated experimentally on a superconducting quantum chip (see document Ewout van den Berg et al. "Probabilistic error cancellation with sparse Pauli-Lindblad models on noisy quantum processors" Nature Physics | Volume 19 | August 2023 | 1116-1121, https://doi.org/10.1038/s41567-023-02042-2). In this document, a sparse Pauli-Lindblad noise model was considered to efficiently characterize and learn device noise and estimate the inverse noise channels $\Lambda_i^{-1}$ for different layers of noisy two-qubit gates. While the method delivered desired results in terms of retrieving nearly bias-free estimates, the exponentially scaling increase in $\gamma$ still limits the usefulness of the method to small circuits.

US 2024/0152795 A1 discloses systems, computer-implemented methods or computer program products to facilitate mitigating quantum errors associated with one or more quantum gates. A noise modeling component can generate a sparse error model of noise associated with one or more quantum gates; employ the sparse error model; and draw samples from an inverse noise model. An insertion component can insert the samples to mitigate errors associated with the one or more quantum gates. The insertion component can reduce the noise by running circuit instances augmented with samples from the inverse noise model. The noise modeling component includes a noise shaping component that can shape the noise affecting one or more quantum gates by twirling to form a Pauli channel.

It is therefore a technical problem to provide a method for noise-reduced signal processing by a quantum circuit and a quantum computer system which provides a desired noise reduction which can be implemented efficiently, i.e. reduces the sampling overhead required to perform bias-free estimation.

The disclosure of the invention refers to the following explanations:

Most quantum computing applications combine classical computing with the execution of one or more sets of quantum computing circuits on a quantum processor. Each circuit execution can roughly be thought of as consisting of three phases:

(1) initialization of the quantum processor to the |0⟩ ground state; (2) application of quantum gates that make up the quantum computing circuit; and (3) measurement of the qubits of interest. For each circuit, this process can be repeated multiple times to obtain the desired measurement statistics.

In the context of this disclosure, a quantum computing circuit (or quantum circuit) can denote a model or diagram that represents the sequence of operations (or quantum gates) applied to qubits to perform a specific quantum computation. Just as classical circuits are built using logic gates like AND, OR, and NOT, quantum circuits are built using quantum gates like the Hadamard gate, CNOT gate, and Pauli gates. These gates manipulate qubit states using quantum phenomena such as superposition and entanglement. A quantum circuit typically includes:

- Input qubits in an initial state (e.g., 0, 1, or a superposition).
- A series of quantum gates that act on the qubits to transform their states.
- Measurement operations that extract results from the qubits at the end.

The quantum circuit can therefore be used to perform a set of operations, such as or represented by quantum gates, on a set of real-world physical qubits with the purpose of obtaining one or more qubit measurements.

A quantum gate (or simply gate) denotes a building block of the quantum computing circuit. It can be understood analogous to classical logic gates, but operates on quantum bits (qubits) instead of classical bits. A quantum gate manipulates the state of qubits through at least one unitary operation, which are reversible transformations that respect the principles of quantum mechanics. An operation performed by a quantum gate can be subject to noise and such a quantum gate can be denoted as a noisy quantum gate.

Single-qubit gates operate on a single qubit. Well-known single-qubit quantum gates are the Hadamard Gate which creates a superposition of two quantum states 10) and 11), a (Pauli-)X-Gate which acts as a classical NOT gate and flips the state of qubit, a (Pauli-)Z-gate which applies a phase shift, the (Pauli-)Y-gate which applies both, a bit-flip and a phase-flip, and the (Pauli-)I-gate which leaves the state of the qubit unchanged. Each Pauli-Gate can be represented by a corresponding Pauli-operator.

Multi-qubit gates operate on two or more qubits simultaneously to e.g. create entanglement or to perform complex operations. A well-known multi-qubit quantum gate is the CNOT gate where one qubit (control) determines whether to apply an X gate to the other qubit (target).

A quantum processor can denote the physical hardware that executes quantum circuits. It contains qubits and the mechanisms needed to perform quantum gates and measurements, leveraging quantum mechanical principles. The quantum processor implements quantum circuits in real-world experiments, running them by applying physical operations on qubits (like using microwave pulses to control superconducting qubits or using lasers to manipulate trapped ions). It can comprise the one or more real-world physical qubits. Qubit states only can exist (or can only be coherent) for a limited amount of time. Thus, an objective of operation of a quantum logic circuit (e.g., including one or more qubits) can be to maximize the coherence time of the employed qubits.

In summary, a quantum circuit describes a computation at an abstract level, while the quantum processor physically implements that computation. Thus, the quantum circuit can be seen as a "program" and the quantum processor as the "hardware" that runs the program. The quantum circuit defines how qubits should be manipulated, and the quantum processor performs these operations on actual qubits, returning the final quantum state or measurement as the output.

In the context of this disclosure, a circuit instance refers to a specific, fully-defined quantum circuit with a concrete set of inputs, gates, and qubit arrangements that is ready to be executed on a quantum processor. It can be understood as a complete version of a quantum circuit, including all the necessary details that make it executable for a particular problem. Key components of circuit instance are qubits, quantum gates, the initial state, the measurement operations and the gate parameters (if any).

A shot refers to a single execution or run of a quantum circuit from start to finish, including the preparation of qubits, application of quantum gates, and measurement of the qubits' final states. Because quantum measurements are probabilistic, multiple shots are typically used to obtain meaningful statistical data from a quantum computation. Each shot involves initializing the qubits, applying the specified quantum operations (gates), and measuring the qubits at the end. The result of each shot is a classical bit string (e.g., 0110) based on the state of the qubits when measured. Quantum circuits can yield different outcomes for each shot because of the probabilistic nature of quantum measurement. For example, if a qubit is in a superposition state, measuring it may give a result of 0 in one shot and 1 in another. The distribution of outcomes from many shots reveals the likelihood of different measurement results. To understand the behavior of a quantum circuit, it is common to run it for a large number of shots (e.g., 1,000 or 10,000). The outcomes of these shots are then analyzed to determine the probabilities of different results. For example, if you measure a qubit that is in an equal superposition of 10) and 11), about 50% of the shots might yield 0, and 50% might yield 1.

Generating (quantum computing) circuit instances can be defined as generating the associated quantum computing circuit for a number of shots to measure qubit values based on the quantum gate arrangement. In other words, each shot corresponds to one complete run of the circuit instance which involves qubit initialization, gate application, and measurement to produce a classical output.

It is a basic idea of the invention to propose a method to estimate and sample from a fused inverse noise channel $\Lambda_{fused}^{-1}$ at a specific circuit section and to introduce an additional quantum operation at said predetermined circuit section of the quantum computing circuit.

A method for noise-reduced signal processing by a quantum computing circuit having at least two quantum gates is proposed. The method comprises a first step of determining a fused inverse noise channel by propagating selected or all predetermined gate-specific inverse noise channels to a predetermined circuit section of the quantum circuit as a function of each (noisy) gate operation of the gates between the gate-specific inverse noise channel and the predetermined circuit section.

A gate-specific noise channel can be understood as a mathematical model that describes the effect of noise or imperfections on the operation performed by the respective gate. A noise channel can represent various types of errors that can occur when qubits are manipulated or stored, leading to decoherence or loss of information. The most important types of noise are a so-called dephasing noise, depolarizing noise, coherent noise, noise due to cross talk, readout errors and state preparation errors. To each noisy quantum gate of the quantum computing circuit, such a gate-specific noise channel can be associated. The gate-specific noise channel is a predetermined noise channel. It can e.g. be determined by well-known methods such as cycle benchmarking which is e.g. disclosed in the document Alexander Erhard et al. "Characterizing large-scale quantum computers via cycle benchmarking" NATURE COMMUNICATIONS | (2019) 10:5347 | https://doi.org/10.1038/s41467-019-13068-7 | www.nature.com/naturecommunications.

Preferably, the gate-specific noise channel is determined such as to resemble idealized Pauli noise which can e.g. involve randomized compiling over the Pauli group (or Pauli twirling). The Pauli group is generated by the Pauli matrices $\{I, X, Y, Z\}$, which from a set of three 2x2 unitary matrices, along with the identity matrix and correspond to the aforementioned Pauli gates.

A gate specific noise channel $\lambda(\rho)$ can then be expressed as

$$\Lambda(\rho) = \sum_{i=1}^{N=4^n} c_i \, P_i \rho P_i^{\dagger} \qquad\qquad \text{formula 1,}$$

where the summation runs over all elements of $P_i$ the Pauli group of dimension n, with n denoting the number of qubits and $\rho$ denotes a density operator. Said density operator describes a state of the quantum system, especially when the system is in a mixed state (probabilistic mixtures of different quantum states), in particular in a noisy state. Generally, the definition $\rho = \sum_{i=1}^{N} \pi_i \, |\psi_i\rangle\langle\psi_i|$ applies, where $\pi_i$ denotes the probability of finding the system in state $|\psi_i\rangle$. The real, positive channel coefficients $c_i$ sum to one and can be interpreted as the probability of Pauli error $P_i$ occurring additionally to the effect of the ideal gate operation U. An important property of Pauli noise channels is that their mathematical inverse will also closely resemble a Pauli channel. As of this, a gate-specific inverse noise channel can be determined for each gate as

$$\Lambda^{-1}(\rho) = \sum_{i=1}^{N} \tilde{c}_i \, P_i \rho P_i^{\dagger} \qquad\qquad \text{formula 2,}$$

where coefficients $\tilde{c}_i$ that are no longer guaranteed to be positive. To implement such an inverse noise channel probabilistically, formula 2 can be restructured as follows:

$$\Lambda^{-1}(\rho) = \sum_{i} \gamma \cdot sgn(\tilde{c}_i) \cdot p_i P_i \rho P_i^{\dagger} \qquad\qquad \text{formula 3,}$$

wherein

$$p_i = \frac{|\tilde{c}_i|}{\gamma} \text{ and } \gamma = \sum_i |\tilde{c}_i| \qquad\qquad \text{formula 4}$$

In known approaches of probabilistic error cancellation, i.e. the aforementioned classical PEC, an inverse according to formula 3 can be performed on average by sampling and applying the Pauli correction $P_i$ directly before the noisy gate with corresponding probability $p_i$ and multiplying the measured expectation value with the corresponding sign, i.e. $sgn(\tilde{c}_i)$ as well as the channel's y -factor.

To apply such a PEC approach to circuits containing multiple noisy gate operations, this process is repeated for each layer $\mathcal{U}_l$ of the quantum circuit, such that a single correction in front of each individual layer has been drawn and is applied directly in front of the layer. Since each sign drawn at the different layers contributes to the final sign of the circuit instance, the global sign can be defined as the product of all individually drawn signs. A circuit layer refers to a quantum gate or group of quantum gates that is/are applied to qubits simultaneously and in parallel. A quantum circuit is usually composed of multiple layers, wherein gates in each layer operate on qubits simultaneously.

To retrieve the expectation value of the mitigated observable, several circuit instances including different drawn corrections are generated and executed. Each instance can be executed with multiple shots. The individual results are multiplied by the total $\gamma$-factor, given by the product of the factors of each layer's y -factor and the respective global signs. Finally, the mitigated expectation value is given by the average of the retrieved samples.

As described in the document Ewout van den Berg et al. "Probabilistic error cancellation with sparse Pauli-Lindblad models on noisy quantum processors" (see above), the factor y $\geq$ 1 is directly related to the variance of the mitigated observable, scaling with $\gamma^2$. Since each noisy layer is associated with an individual noise channel, and thus an individual factor $\gamma_l$, the total y -factor of the system $\gamma_{total}$ increases exponentially. Thus, the variance of the mitigated expectation value scales exponentially, meaning that the number of shots required for a small sampling error, grows exponentially with the circuit depth.

Instead of performing an error correction in front of each individual layer of the quantum circuit, a fused inverse noise channel is introduced which allows for a so-called (error-) propagated probabilistic error cancellation (pPEC). In pPEC, all or selected gate-specific inverse noise channels of a given quantum circuit are propagated to a predetermined circuit section, preferably the start or end of the quantum circuit, and then combined/fused, e.g. by multiplication, yielding a channel corresponding to the fused inverse noise channel. In the context of this invention, a gate-specific inverse noise channel within the predetermined circuit section is propagated by applying an identity operation.

In other words, the gate-specific inverse noise channels of those gates are propagated that are connected to the predetermined circuit section via at least one other gate. In even other words, the gate-specific inverse noise channel of the gate directly connected to the predetermined circuit section is propagated by an identity operation or considered as is in the combined/fused inverse noise channel.

If the gate-specific inverse noise channels of all noisy gates of quantum circuit are propagated, the fused inverse noise channel can also be referred to as global inverse noise channel. As outlined in the following, such a fused inverse noise channel can e.g. be determined using a Monte-Carlo method as well as an analytic method based on sparse Pauli-Lindbladian noise models.

In the context of this disclosure, a propagation can be understood as a process by which an operation according to a predetermined gate-specific inverse noise channel evolves as it passes through a gate or a sequence of gates in the quantum computing circuit. It describes how the said operation is transformed step by step as quantum operations according to the gates between the predetermined circuit section and the gate to which the gate-specific inverse noise channel is assigned are applied. This can also be referred to as Heisenberg evolution.

A gate-specific propagation can therefore denote the transformation of a quantum operation according to inverse noise channel if said specific gate is applied, i.e. the inverse noise channel operation is manipulated by said gate operation. This can be also referred to as gate conjugation. A forward propagation, i.e. the process of propagating forward through a gate, can denote the transformation from an input side of the respective gate to an output side of the respective gate, i.e. in the direction from an initial state of the qubits to a final state. A backward propagation, i.e. the process of propagating backward through a gate, can denote the transformation from the output side of the respective gate to the input side of the respective gate, i.e. in the direction from the final state of the qubits to the initial state. The backward propagation can be a reverse operation/manipulation with respect to the forward propagation. It can be understood as uncomputing the forward propagation.

If the gate-specific inverse noise channels according to formula 3 are known, i.e. are predetermined, the global inverse inverse noise channel at the start of the quantum circuit can be calculated as

$$\Lambda_{global}^{-1} = \prod_{l=L}^{1} \widetilde{\Lambda}_l^{-1} \qquad\qquad \text{formula 5,}$$

where an individual, propagated noise channel is given by

$$\widetilde{\Lambda}_l^{-1} = \mathcal{U}_0 \cdots \mathcal{U}_{l-2} \mathcal{U}_{l-1}(\Lambda_l^{-1}) \qquad\qquad \text{formula 6,}$$

where $\mathcal{U}_j(\Lambda_l^{-1}) = \mathcal{U}_j \Lambda_l^{-1} \mathcal{U}_j^{\dagger}$ and $\mathcal{U}_j$ denoting a noiseless gate operation. The product in formula 6 runs over the layers in reversed order, and the gate-specific inverse noise channels are only conjugated with the ideal circuit operations, represented by $\mathcal{U}_j$ , and not the gate-specific noise channels.

The global inverse noise channel according to formulas 5 and 6 can be determined based on the assumption that the quantum circuit can be decomposed into a product of individual noisy gate layers $\tilde{\mathcal{U}}_l$ , each consisting of a, (largely)

learnable noise channel $\Lambda_l$. It can further be assumed that one qubit operations are effectively noiseless and only the two qubit operation contribute to the noise due to order of magnitude higher errors on most devices. The full circuit operation can then be decomposed into a product of noisy quantum circuit operations as

$$\tilde{\mathcal{U}} = \prod_l \tilde{\mathcal{U}}_l = \prod_l (\Lambda_l \circ \mathcal{U}_l) \qquad \text{formula 7,}$$

where $\Lambda_l = 1$ if $\mathcal{U}_l$ consists solely of single qubit gates.

While formulas 5 to 6 show how a global inverse noise channel at the start of the quantum circuit can be determined, a similar determination can be applied if the fused inverse is to be determined for a circuit section different from the start of quantum circuit.

Preferably, a gate-specific noise channel is determined as being diagonal in the Pauli basis. In this case, the corresponding inverse will also be diagonal in the Pauli basis i.e. a Pauli channel. Further, the gate propagation can be modelled as gate conjugation over the Clifford group which advantageously simplifies the determination of the fused inverse. This is the case since elements of the Clifford group are defined by the property that the conjugation of a Pauli operator by a Clifford gate merely maps the Pauli operator to a different operator of the Pauli group which allows to determine a propagated inverse noise channel by essentially moving an inverse noise channel, i.e. a Pauli operator or Pauli correction term, past a Clifford gate by exchanging it with the conjugated inverse noise channel, i.e. a conjugated Pauli operator or conjugated Pauli correction. Such conjugations can be predetermined and stored for selected gates which allows an efficient performance of the conjugation by using e.g. a look-up table,

In other words, the fused inverse noise channel results from a fusion or combination of at least two gate-specific inverse noise channels, wherein at least one of said gate-specific noise channels is propagated forward or backward through, i.e. conjugated over, at least one gate of the quantum computing circuit. Determining the fused inverse noise channel can also be referred to as generating an inverse error model of noise and can be performed using a processor and, if applicable, a memory.

The method further comprises a second step of modifying the signal processing by the quantum computing circuit by adding an additional quantum computing operation at the predetermined circuit section according to the fused inverse noise channel. In particular, control signals that physically manipulate qubits can be determined as a function of the fused inverse noise channel. In other words, a circuit instance can be provided including the said additional quantum computing operation and this circuit instance can be executed multiple times, i.e. by multiple shots.

In order to add the additional quantum operation, a sample can be drawn from the fused inverse noise model. This can involve determining error probabilities from the fused inverse noise model and to apply the additional quantum operation based on these probabilities. Different samples can be drawn by randomly applying inverse operations represented by the fused inverse noise model based on the likelihood of different errors. This approximates the action of the fused inverse noise channel.

Then, a preset number of different circuit instances involving the additional quantum operation, i.e. the error correction operation, can be generated, wherein for each circuit instance, a different sample is drawn from the fused inverse noise channel and the circuit-specific error correction operation is determined based on that sample. Then, this circuit instance can be executed for a preset number of shots. The quantum measurements from the shots for each different circuit instance can then be evaluated probabilistically in order to determine the expectation value of a selected observable.

To summarize, the method can comprise the following steps:

1. determining the fused inverse noise channel as outlined above,
2. sampling form the fused inverse noise channel and generating a sample-specific circuit instance as a function of/considering the error correction operation represented by the sample and the circuit-specific quantum gate-specific operations on the qubits,
3. executing the sample-specific circuit instance for a predetermined number of shots, comprising e.g. inputting qubits in an initial state (e.g., 0, 1, or a superposition) and transform their states according to the operations of step 2.,
4. performing measurement operations that extract classical results from the qubits,
5. repeat steps 2 to 4 for a predetermined number of times.

Then, the measurement results can be analyzed probabilistically, e.g. through weighting and averaging, in order to determine e.g. an expectation value of an observable.

This proposed method advantageously allows to estimate the global noise channel directly via error propagation. Since each noise channel can be given by a probabilistic Pauli channel, each individual term can be propagated to the predetermined circuit section and then be combined, e.g. multiplied, to estimate the full inverse noise channel. If Clifford commutation is assumed, the Pauli structure of the propagated inverse noise channels can be preserved so that the fused inverse noise channel is also given in Pauli form, allowing for straightforward sampling. The key advantage of combining the gate-specific inverse noise channels together (to provide the fused inverse noise channel) before the probabilistic implementation stems from the fact that terms in the Pauli combination, e.g. the Pauli products, interfere. Some terms might interfere constructively whereas others effectively cancel each other, resulting in overall smaller coefficients in the final Pauli sum. The decrease in the sampling overhead is therefore given by

$$\frac{\gamma_{ppec}}{\gamma} = \frac{\gamma-\delta}{\gamma} \qquad\qquad \text{formula 8,}$$

wherein $\delta$ quantifies the amount of destructively interfering errors. The proposed pPEC scheme mitigates the errors of a quantum circuit by implementing an error mitigation operation that is inverse to a fused noise channel being determined as a function of all noisy gate operations. Individual, implementable error mitigation operations can be sampled from this fused inverse operation, thus generating different circuit instances. The results of these instances are weighted and averaged to determine the error-free measured variable.

In other words, the proposed method allows to perform a combined error correction to be made at a predetermined circuit section, in particular a single correction at the beginning or end of the circuit and allows to take benefit from redundancies in such a combined error correction. The propagation implicitly uses information about the physical connectivity of the hardware. As a result, the global / fused inverse noise channel can be executed with significantly less quantum overhead on the hardware.

In summary, the proposed method advantageously allows to reduce the sampling overhead while a bias free expectation value of a noisy quantum circuit can be determined. The latter is due to the fact that the noise model is only restructured while it is mathematically left identical.

Tests and simulation have shown that the method delivers excellent results for current hardware error rates, reducing the sampling overhead by several orders of magnitude for even moderately deep quantum circuits. In particular, for quantum circuits consisting of 30-50 qubits, a sampling reduction of 1 to 2 orders of magnitude can be achieved.

In a preferred embodiment, the predetermined section is the start or end of the quantum computing circuit. By the quantum circuit, input qubits can be processed by a sequence of gates (which typically does not include the preparation of the input qubits) such that output qubits are provided from which the measurements are taken. The start of the quantum circuit can be section before the first gate of the sequence is applied to the qubits. The end of the quantum circuit can be section after the last gate of the sequence is applied to the qubits.

In such an embodiment, a noise reduction considering the noise of all noisy gates in the quantum circuit can be performed effectively, i.e. with a reduced sampling overhead.

In another embodiment, a gate-specific noise channel is modelled as Pauli noise channel. This advantageously allows an accurate modelling the of the gate-specific noise channels while also allowing an efficient determination of the gate-specific inverse noise channels as well as the fused inverse noise channel which has been illustrated before.

In a further embodiment, propagating comprises

a) determining a gate-specific part of the fused inverse noise channel by applying a sequence of gate-specific conjugation operations for each gate arranged between the respective gate-specific noise channel and the predetermined circuit section,
b) offsetting the gate-specific parts.

Applying the gate-specific conjugation operations has been explained before. Offsetting the gate-specific parts provides a combined (noise correction) operation and it considers the signs $sgn(\bar{c}_i)$ as well as the probabilities $p_i$ in each gate-specific inverse noise channel. Offsetting is preferably performed by multiplication. This advantageously allows an efficient and accurate determination of the fused inverse while also providing the above interference which, in turn, reduces the sampling overhead.

In a further embodiment, an operator reduction is performed for the fused inverse noise channel. This operation reduction can in particular be referred to as XI-reduction.

By performing the operator reduction, the number of error mitigation operations, in particular the number of Pauli corrections or application of Pauli gates for error mitigation, that need to be applied at the predetermined quantum circuit section can be reduced. The reduction utilizes the phase invariance of the computational basis states. Considering for example the Pauli Z operator, which is provided by the aforementioned Pauli-Z-Gate, the following relationship holds: $Z\,|0\rangle = I\,|0\rangle$ and $Z\,|1\rangle = -\,|1\rangle = I\,|1\rangle$ (up to a global phase).

Therefore, each Z operator at the predetermined circuit section can be replaced with an identity operation if applied to a computational basis state without superposition.

Furthermore, the Pauli-Y operator (which is provided by the aforementioned Pauli-Y-Gate ) can be expressed as $Y = -iX \cdot Z$ and thus Y 10) = X 10) and Y 11) = X 11) (omitting the global phase).

Resulting from these relationships, a first exemplary Pauli string, i.e. a sequence of Pauli operations, IXXZY can be transformed into a Pauli string IXXIX and a second exemplary Pauli string IYYIX can be transformed into the same Pauli string IXXIX, i.e. to the the same resulting Pauli operator. Therefore, the first and second exemplary Pauli strings interfere after the operator reduction. Using these reductions the total number of corrections and thus the maximum number of samples that need to be sampled individually reduces from $4^n$ to $2^n$. This reduction is inherently symmetric, in the sense that it can be applied after propagation to the predetermined circuit section, in particular to the start of the quantum circuit or to the end of the quantum circuit, directly before the measurement. This is based on the fact that a quantum measurement in the computational basis is inherently invariant under changes of the relative phase of the qubit. A physical measurement is usually performed in the computational basis, i.e. the $|0\rangle$, $|1\rangle$ basis, as basis changes, e.g. from a X basis, are usually incorporated in the circuit. Such basis changes can be implemented by introducing a gate, e.g. a Hadamard Gate.

In summary, the proposed operator reduction advantageously further reduces the sampling overhead.

In a further embodiment, the fused inverse noise channel is determined by additional considering a read-out error. This can also be referred to as readout-error mitigation. In quantum computing, the projective measurement and bit assignment of the quantum state is another considerable source of errors. Considering this readout-error will further improve the accuracy of estimating the expected value of an observable. In particular, a readout-error model can be determined, wherein the fused inverse noise channel is determined as a function of the readout-error model which is propagated to the predetermined circuit section.

In a further embodiment, a measurement error channel is constructed and its inverse is propagated. In this case, the readout-error model is determined as a channel. As above, an inverse channel can be determined and then be propagated as in the case of a gate-specific inverse noise channel. Preferably, the readout-error can be modelled as a Pauli operator, i.e. as a Pauli channel or resembling a Pauli channel, e.g. having Pauli channel characteristics. This advantageously allows a computationally efficient integration of the readout-error mitigation into the proposed propagated probabilistic error cancellation framework.

In a further embodiment, constructing the measurement error channel comprises

c) determining an assignment matrix which correlates ideal measurements with noisy measurements,
d) symmetrizing the assignment matrix.

It can be assumed that the correlation between ideal measurements $\vec{p}_{ideal}$ with noisy measurements $\vec{p}_{noisy}$ is given by a matrix $A$ according to

$$\vec{p}_{noisy} = A\vec{p}_{ideal} \qquad \text{formula 9,}$$

wherein the assignment matrix $A$ can be calculated by preparing each basis state individually and measuring the noisy outcome. The idealized counts can then be retrieved by inverting the assignment matrix and multiplying the retrieved bit-strings of the experiment with the inverted matrix as

$$\vec{p}_{ideal} = A^{-1}\vec{p}_{noisy} \qquad \text{formula 10}$$

While this determination of the assignment matrix advantageously allows a complete or nearly complete elimination of readout-errors, an exponential overhead for the preparation of the 2" basis states is introduced.

To reduce this overhead, the assignment matrix can be assumed as a tensor product noise model

$$A = \otimes_{i=1}^{n} A^i = \otimes_{i=1}^{n} \begin{bmatrix} 1 - \epsilon_i & \eta_i \\ \epsilon_i & 1 - \eta_i \end{bmatrix} \qquad \text{formula 11}$$

as presented in the document Bravyi et al. "Mitigating measurement errors in multi-qubit experiments", IBM Quantum, T. J. Watson Research Center, Yorktown Heights, NY 10598 2IBM Quantum, Almaden Research Center, San Jose, CA 95120, arXiv:2006.14044v2 [quant-ph] 1 Jul 2020 and with $\varepsilon_i$ and $\eta_i$ denoting the $|0\rangle$ -> 1 and $|1\rangle$ -> 0 bit-flip probabilities on qubit I respectively and n being the number of qubits. Results and simulations have shown that this simplification provides reasonable results for sparse measurement outcomes.

The tensor product of formula 11 runs over the individual $2 \times 2$ assignment matrices which are defined for each individual qubit. These matrices are generally not equal among the qubits nor symmetrical under transposition, meaning that the individual bit-flip probabilities for $10) \rightarrow 1$ and $11) \rightarrow 0$ are not identical. To apply readout-error mitigation efficiently, symmetrizing the assignment matrix $A$ of formula 9, in particular of formula 11 can be performed. This advantageously allows to construct a measurement error channel that closely resembles a Pauli channel, i.e. has Pauli channel characteristics.

Symmetrizing the matrices $A^i$ can e.g. be achieved by a randomized insertion of X gates, drawn with 50% probability, and correction for the bit-flip in post-processing, so that $A^i = (A^i)^T$. In other words, symmetrizing can be performed by preparing a basis state and take a measurement in order to determine a first probability of a basis state flip $|1\rangle \to |0\rangle$ or $|0\rangle \to |1\rangle$. Then, the basis state can be prepared, and a bit flip operation can be applied. Taking measurements than allows to determine a further probability of the "inverse" flip $|0\rangle \to |1\rangle$ or $|1\rangle \to |0\rangle$. Depending on the first and further probability, an average probability can be determined, e.g. as the mean value. The readout-error can then be determined as X operator applied with the average probability.

The above allows to express the individual measurement channel as

$$\prod_{meas}(\rho) = \sum_m (1 - p_x)\, \pi_m I \rho I \pi_m + p_x \pi_m X \rho X \pi_m \qquad\qquad \text{formula 12}$$

where the $\pi_m$ are POVM projection operators and the bit-flip probabilities are explicitly given by the arithmetic average of the bit-flip probabilities $p_{x,i} = \dfrac{\epsilon_i + \eta_i}{2}$. To cancel the effect of the readout-error, the measurement channel according to formula 12 is inverted, wherein the inverse is guaranteed to be an X channel which can be propagated in the aforementioned framework. This advantageously allows a computationally efficient integration of the readout-error mitigation into the proposed propagated probabilistic error cancellation framework.

In a further embodiment, a Monte-Carlo-simulation is performed to determine the fused inverse noise channel. In such a Monte-Carlo-simulation, a selected gate-specific inverse noise channel can be sampled. Depending on the location of the gate-specific inverse noise channel and the predetermined circuit section, said gate-specific inverse noise channel is propagated forward or backward via the next gate by applying a conjugation operation. After this single-gate propagation, the propagated inverse noise channel is combined with a sample of the gate-specific inverse noise channel assigned to the gate via which the propagation was performed. The combined inverse noise channels are then further propagated according to this scheme until the combined inverse noise channel at the predetermined circuit section is determined. This is repeated for each gate-specific inverse noise channel. After having determined the resulting combined inverse noise channel for each gate-specific inverse noise channel, the fused inverse noise channel is determined as a function of each combined inverse noise channel. Such a determination of the fused inverse noise channel can be repeated for a predetermined number of times and a resulting fused inverse noise channel can then be determined as a function of the respective results. This advantageously allows an accurate determination of the fused inverse noise channel.

In a preferred embodiment, the noise channels are modelled according to a Sparse-Pauli-Lindbladian model. The Sparse-Pauli-Lindbladian model is e.g. described in US 2024/0152795 A1. Sparse-Pauli-Lindbladian (SPL) noise models provide an efficient way of describing the noise on limited connectivity devices. These noise models can be efficiently stored in a product representation of individual Pauli channels which only model interactions between physically connected qubits. The product representation of an inverse Pauli channel is given by

$$\Lambda^{-1}(\rho) = \prod_{k \in \mathcal{K}} (w_k I(\cdot) - (1 - w_k) P_k(\cdot))\rho \qquad\qquad \text{formula 13}$$

where the product runs over an indexed set $\mathcal{K}$ with far fewer terms then the aforementioned (dense) noise model $|\,\mathcal{K}\,| \ll 4n$ and $P_i(\rho) \coloneqq P_{i\rho} P_i^\dagger$ is a shorthand notation for the channel single qubit Pauli channel. $w_k$ represents a propability that no error is introduced by the k-th multiplier. Correspondingly, $1-w_k$ represents a propability that an error in term for a Pauli operator $P_k$ is introduced by the k-th multiplier. The $\cdot$ symbol is a placeholder denoting that the product is applied to the systems density operator $\rho$. Hereby $\mathcal{K}$ can for example be chosen in a way that only Pauli strings with none identity terms on at most two (physically connected) qubits are present. Applying the proposed pPEC method, each of the individually commuting Pauli channels is propagated to the predetermined circuit section by taking its conjugation with the respective circuit operations, i.e. gate operations,

$$\tilde{\Lambda}^{-1}(\rho) = \prod_{k \in \mathcal{K}} (w_k C(I)(\cdot) - (1 - w_k) C(P_k)(\cdot))\rho = \prod_{k \in \mathcal{K}} (w_k I(\cdot) - (1 - w_k) \tilde{P}_k(\cdot))\rho$$

$$\text{formula 14}$$

where C denotes the Clifford circuit operation up to the respective error channel and the operator

$P_k = C P_k C^\dagger \cdot\ C^\dagger P_k^\dagger C$ denotes the conjugated Pauli super operator. Applying this procedure to each correction layer until the predetermined circuit section, the fused inverse noise channel is given by

$$\prod_{k \in L \cdot \mathcal{K}} (w_k I(\cdot) - (1 - w_k) \tilde{P}_k(\cdot))\rho \qquad \text{formula 15}$$

where the index $k$ now runs over all model Paulis for the total number of layers $L$, yielding a total of $L \cdot | \mathcal{K} |$ terms. After the propagation, some Pauli operations or strings will be mapped to Pauli operators or strings already existing in the model. The amount of terms can be directly reduced by multiplying terms with equal Paulis together (wI - (1 - w)P).

$$(w'I - (1 - w')P) = ((ww' + (1 - w)(1 - w'))I - (w(1 - w')) + (w'(1 - w)P$$

This reduction can advantageously reduce the number of total channels. A further channel or operator reduction can be achieved by utilizing the XI-reduction outlined before. In this embodiment, the Pauli operator Y can be replaced by the Pauli operator X and the Pauli operator Z by the Pauli operator I in each of the individual Pauli channels in the product of formula 15. As an immediate improvement, all channels which contain Pauli operators consisting only of Z and I operators can be directly omitted from the global inverse noise channel. This can also be denoted as passive reduction.

A further decrease in the sampling overhead can be achieved by explicitly expanding the product of formula 15. Due to the multiplication of equal Pauli channels as well as the larger number of channels in this product, this expansion will yield far more drastic reductions than the expansion of an individual channel given by formula 13.

As a result, an accurate determination of the fused inverse noise channel is provided which advantageously allows to reduce the sampling overhead in the proposed propagated error correction.

The method according to one of the embodiments described in this disclosure can be a computer-implemented method. This can comprise performing, using a processor, which is e.g. part of a quantum computer system and e.g. operatively coupled to a memory, one or all methods steps described before. Further described is a computer program product that can comprise a computer readable storage medium having program instructions embodied therewith. The program instructions are executable by a processor that can cause the processor to perform one or all methods steps described before.

Further proposed is a quantum computer system comprising a quantum circuit with at least two gates and means for modifying the quantum circuit at a predetermined circuit section according to a fused inverse noise channel. This quantum computer system is in particular configured to perform a method according to one of the embodiments described in this disclosure. This provides the aforementioned technical advantages.

The invention will also be described with reference to the following figures. The figures show:

Fig. 1    a schematic flow diagram of the method according to the invention,
Fig. 2    a schematic flow diagram of the method according to the invention involving an error reduction,
Fig. 3    a schematic flow diagram of the method according to the invention involving a measurement error propagation,
Fig. 4a    a schematic block diagram of a quantum circuit with gate-specific inverse noise channels,
Fig. 4b    a schematic block diagram of the quantum circuit of Fig. 4a with propagated gate-specific inverse noise channels,
Fig. 4c    a schematic block diagram of the quantum circuit of Fig. 4a with a fused inverse noise channel,
Fig. 5a    a schematic block diagram of a further quantum circuit with gate-specific inverse noise channels,
Fig. 5b    a schematic block diagram of the quantum circuit of Fig. 5a with propagated gate-specific inverse noise channels,
Fig. 6    schematic circuit diagrams before and after error propagation and operator reduction,
Fig. 7    schematic circuit diagrams before and after error propagation and operator reduction,
Fig. 8    exemplary distributions of an observable,
Fig. 9    an exemplary distribution of a sampling overhead,
Fig. 10    an exemplary distribution of a sampling overhead,
Fig. 11    an exemplary distribution of a sampling overhead,
Fig. 12    an exemplary distribution of a sampling overhead, and
Fig. 13    a schematic block diagram of a quantum computer system.

In the following, the same reference numerals denote the same or similar technical features.

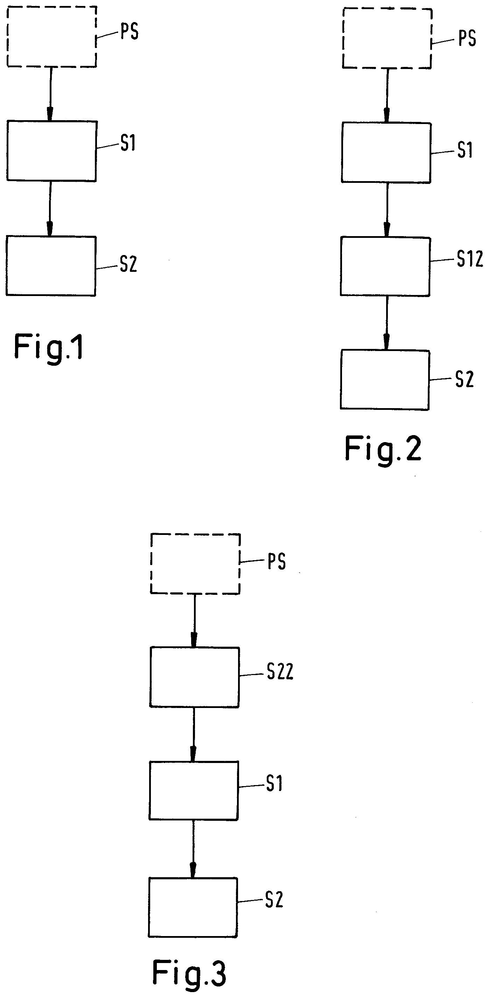

Fig. 1 shows a schematic flow diagram of the method according to the invention. In a preparation step PS which is not necessarily a step of the proposed method, a quantum circuit 1 having a number of noisy quantum gates $\tilde{\mathcal{U}}_l$ and which is adapted to perform a predetermined operation on qubits is designed (see Fig. 3). Further, a gate-specific noise channel

$\Lambda_l$ and the respective inverse $\Lambda_l^{-1}$ are determined for each noisy quantum gate. This determination can e.g. be performed as outlined with respect to the formulas 1 to 4 or with respect to the formula 13 above.

In a first step S1, a fused inverse noise channel $\Lambda_{fused}^{-1}$ for a predetermined circuit section of the quantum circuit 1 is determined which is performed by propagating selected or all predetermined gate-specific inverse noise channels $\Lambda_l^{-1}$ to a predetermined circuit section of the quantum circuit as a function of each noisy gate operation of the gates $\widetilde{\mathcal{U}}_l$ between the gate-specific inverse noise channel $\Lambda_l^{-1}$ and the predetermined circuit section. If the gate-specific inverse noise channels $\Lambda_l^{-1}$ of all noisy quantum gates $\widetilde{\mathcal{U}}_l$ of the quantum circuit 1 are propagated to the start of the quantum circuit, the resulting fused inverse noise channel $\Lambda_{fused}^{-1}$ can be denoted as global inverse noise channel and can be determined according to formulas 5 and 6 above. Preferably but not being meant to limit the general concept of the approach, each gate-specific noise channel $\Lambda_l$ is modelled as idealized Pauli noise, e.g. a product of Pauli operators, and propagating the gate-specific inverse noise channels $\Lambda_l^{-1}$ over the quantum gates is modelled as gate conjugation over the Clifford group.

In a second step S2, the signal processing by the quantum computing circuit 1 is modified by adding an additional quantum computing operation at the predetermined circuit section according to the fused inverse noise channel $\Lambda_{fused}^{-1}$. In order to determine such an additional computing operation, a sample can be drawn from the fused inverse noise channel $\Lambda_{fused}^{-1}$. This can involve determining probabilities from the fused inverse noise model and to apply an error correction operation based on these probabilities. In particular, an inverse error operation (being equivalent to an inverse error operation) can be randomly selected from the fused inverse noise channel which represents different inverse error operations) according to the inverse error operation-specific probabilities (which are also represented by the fused inverse noise channel). In other words, a sample can be drawn by randomly applying inverse operations represented by the fused inverse noise model based on the likelihood of different errors. This approximates the action of the fused inverse noise channel.

Fig. 2 shows a schematic flow diagram of the method according to the invention involving an operator reduction. In this case, the method comprises a first intermediate step S12 which is executed after the first step S1. It can be assumed that the fused inverse noise channel $\Lambda_{fused}^{-1}$ can be expressed as a multiplication of Pauli operators providing a sequence of Pauli operations. In this sequence, each Pauli-Z-operator can be replaced by a Pauli-I-operator (if applied to a computational basis state without superposition) and each Pauli-Y-operator can be replaced by a Pauli X-operator. As outlined above, this operator reduction can reduce a sampling overhead due to interference effects.

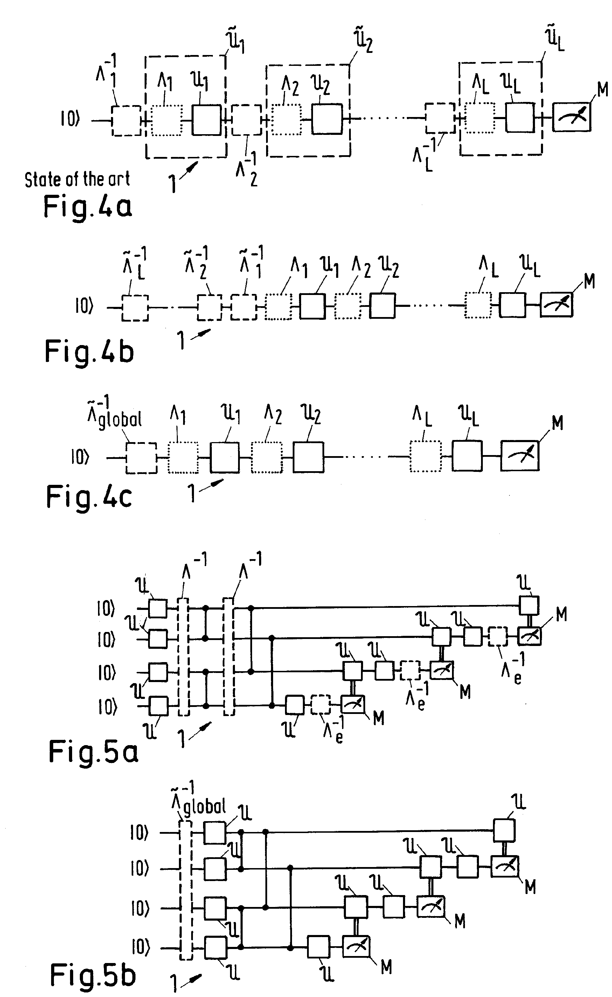

Fig. 3 a schematic flow diagram of the method according to the invention involving a read-out error propagation. In this case, the method comprises a second intermediate step S22 which is executed after the preparation step PS or as part of the preparation step PS. In this second intermediate step S22, a read-out error can be modelled, in particular by a constructing a measurement error channel. This measurement error channel can be modeled as a Pauli channel. This allows to determine an inverse of said measurement channel in the first step which is or resembles also a Pauli channel. Then, as for the gate-specific inverse noise channels, an inverse $\Lambda_e^{-1}$ (see Fig. 5a) can be determined and propagated in order to be considered within the determination of the fused inverse noise channel $\Lambda_{fused}^{-1}$.

Fig. 4a shows a schematic block diagram of a quantum circuit 1 according to the probabilistic error correction (state of the art). In this example, the quantum circuit 1 comprises one qubit and L noisy qubit gates $\widetilde{\mathcal{U}}_l$ which are modelled as a combination of a gate-specific noise channel $\Lambda_l$ (represented by a dotted line) and the noiseless gates $\mathcal{U}_l$ (represented by solid lines). Further shown are gate-specific inverse noise channels $\Lambda_l^{-1}$ (represented by dashed lines). A qubit with the basis state $|0\rangle$ is processed by the shown quantum circuit 1 and after all operations according to the gate-specific inverse noise channels $\Lambda_l^{-1}$ as well as to the noisy qubit gates $\widetilde{\mathcal{U}}_l$ have been applied, a measurement M is performed. The operations performed by the noiseless gates $\mathcal{U}_l$ are Clifford operations.

Fig. 4b shows a schematic block diagram of the quantum circuit 1 of Fig. 4a with propagated gate-specific inverse noise channels $\widetilde{\Lambda}_l^{-1}$. In the embodiment shown in Fig. 4a, the gate-specific inverse noise channels $\Lambda_l^{-1}$ shown in Fig. 4a are propagated to the start of the quantum circuit 1. First, the gate-specific inverse noise channel $\Lambda_L^{-1}$ of the last gate $\mathcal{U}_l$ is propagated, i.e. moved, to the start of the circuit. This can be done, e.g. by calculation, using the Clifford conjugation P' = $CPC^\dagger$ where $P$ corresponds to an individual operator of a Pauli channel and C to a gate operation of the Clifford group. Each propagated gate-specific inverse noise channels $\widetilde{\Lambda}_l^{-1}$ can be determined according to formula 6 above, i.e. as a function of noiseless gate operations. The propagated gate-specific inverse noise channel $\widetilde{\Lambda}_1^{-1}$ of the first noisy qubit gate $\widetilde{\mathcal{U}}_1$, however, is propagated by applying an identity operation or corresponds to the gate-specific inverse noise channel $\Lambda_1^{-1}$.

Fig. 4c a schematic block diagram of the quantum circuit of Fig. 4a with a fused inverse noise channel, i.e. a global inverse noise channel $\widetilde{\Lambda}_{global}^{-1}$. This global inverse noise channel $\widetilde{\Lambda}_{global}^{-1}$ is determined by offsetting the propagated gate-specific inverse noise channels $\widetilde{\Lambda}_l^{-1}$ (see Fig. 4b) against each other at the start of the quantum circuit 1. As some errors interfere with each other here, the number of correction operations required is significantly lower. As the correction operations can be modelled as Pauli operations, the number of corrections can be further reduced. This can be achieved by utilizing a symmetry of Pauli operators modelling the Pauli operations if propagated to the start of the quantum circuit 1. Here and as outlined with respect to the embodiment shown in Fig. 2, the Pauli operator Y is replaced by a Paul operator X and the Pauli operator Z by the Pauli operator I. Determination of the global inverse noise channel $\widetilde{\Lambda}_{global}^{-1}$ now allows the corrections to be made in a single step instead of performing a correction step for each noisy gate $\widetilde{\mathcal{U}}_l$. It is to be noted that the method does not necessarily have to be carried out to the end of the quantum circuit and can be aborted at any step.

Fig. 5a a schematic block diagram of a further quantum circuit 1 with gate-specific inverse noise channels, the quantum circuit 1 being a measurement-based quantum circuit 1 is considered. In measurement-based quantum computing, a highly entangled "resource state" is first created by Clifford operations. Subsequently, gate operations are performed by measuring the qubits in adaptive bases. For the embodiment shown in Fig. 5a, it is assumed that each layer consists of 2 qubit gates that can be executed in parallel and the measurement M of the quantum state are affected by a measurement noise channel (not shown). For the sake of simplicity, only the gate-specific inverse noise channels Λ$^{-1}$ and inverse measurement noise channels $\Lambda_e^{-1}$ are shown while a representation of the gate-specific noise channels Λ has been omitted.

Fig. 5b shows a schematic block diagram of the quantum circuit 1 of Fig. 5a with a global inverse noise channel $\widetilde{\Lambda}_{global}^{-1}$ resulting from offsetting the propagated gate-specific inverse noise channels as in the embodiment shown in Fig. 4c. As the gate-specific inverse noise channels, the measurement noise channel as well as the corresponding inverse channels are modelled as Pauli channels, they can be propagated to the start of the quantum circuit 1 using Clifford conjugation. In particular, the errors of the measurement operations can also be moved to the start of the quantum circuit 1. As outlined with respect to the embodiment shown in Fig. 4c, it is further possible to reduce the number of correction operations at the beginning of the quantum circuit 1 to the Pauli operators X and I. As in Fig. 5a, the representation of the gate-specific noise channels Λ has been omitted for the sake of simplicity.

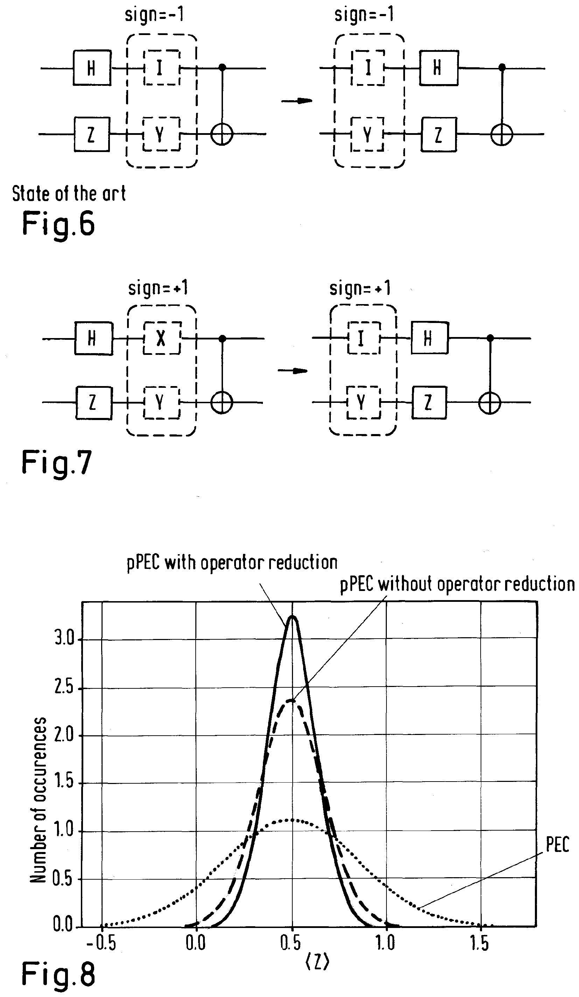

Fig. 6 shows a schematic circuit section before error propagation (left) and after error propagation (right). Exemplary inverse noise operations are modelled as a Pauli-I-operation and a Pauli-Y-operation (dashed boxes). The first inverse noise operations is propagated via a Hadamard gate H in an output-input direction (from right to left in the shown circuit section). The further inverse noise operations is propagated via a Pauli-Y-gate Y in the output-input direction. Further shown is the sign -1 of the non-propagated operations as well as the propagated operations.

Fig. 7 shows a schematic circuit section before error propagation (left) and after error propagation (right). Exemplary inverse noise operations are modelled as a Pauli-X-operation and a Pauli-Y-operation (dashed boxes). Again, the first inverse noise operations is propagated via a Hadamard gate H in an output-input direction (from right to left in the shown circuit section). The further inverse noise operations is propagated via a Pauli-Y-gate Y in the output-input direction. Further shown is the sign +1 of the non-propagated operations as well as the propagated operations. In contrast to the embodiment shown in Fig. 6, an operator reduction is performed. Propagating the Pauli-X-operation as above yields a Pauli-Z-operation which is mapped to a Pauli-I-operation by the operator reduction.

It can be seen that the propagated inverse noise operations in the embodiment shown in Fig. 7 are the same as the propagated inverse noise operations as shown in Fig. 6 although with a different sign. This operator reduction, however, provides a redundant calculation of the inverse noise operations.

Fig. 8 shows exemplary distributions of an observable resulting from a numerical simulation of different noise reduction schemes for a 10 qubits circuit consisting of Hadamard (H), Pauli, controlled phase (CX) and measurement operations. For each (noisy) two-qubit gate, a homogenous Pauli noise channel is determined directly after the application of the respective gate to the circuit. The error probability was selected as p = 2% to resemble current hardware error rates. The noise was modeled locally acting solely on the qubits participating in the respective gate. Hardware specific idle times of qubits were not explicitly modeled. Further, an approximate 2% readout error was considered.

Three different noise reduction schemes were benchmarked, namely the classical PEC reduction (state of the art), the proposed pPEC without an operator reduction as well as the proposed pPEC with an error reduction. In the latter two scenarios, the readout error was considered as outlined above.

For the PEC scheme, correction operations were drawn from each gate-specific inverse noise channel directly. For the pPEC schemes one correction operation was drawn from the global inverse noise channel which was estimated as outlined above using a total of 105 Monte-Carlo samples. From each of these distributions a total of 40 correction circuit instances is drawn, which are simulated with 1024 shots per circuit instance. The obtained expectation values are then averaged and rescaled by the total system's y factor, given by

$$\frac{\gamma_{pPEC}}{y} = \frac{\#\,paths\,total - \#interfering\,paths}{\#paths\,total} \qquad\qquad \text{formula 16}$$

for the pPEC scheme and operator-reduced pPEC scheme alike. Formula 16 gives an estimate of the sampling overhead reduction by the amount of path interference, wherein a path refers to one step of the Monte Carlo algorithm. To obtain a sufficient amount of statistics a sample of a total of 1000 expectation values per scheme was taken.

In Fig. 8, the results of the classical PEC scheme are indicated by a dotted line, the results of the pPEC scheme without an operator reduction by a dashed line and the results of the pPEC scheme with an operator reduction by a solid line. All schemes are able to retrieve the bias free expectation value on average, although at vastly different variances. The variance of the mitigated expectation value is directly proportional to the $\gamma$-factors of the inverse noise channels. It is shown that the calculated $\gamma_{pPEC}$ of formula 16 represents the simulated differences in variances exactly.

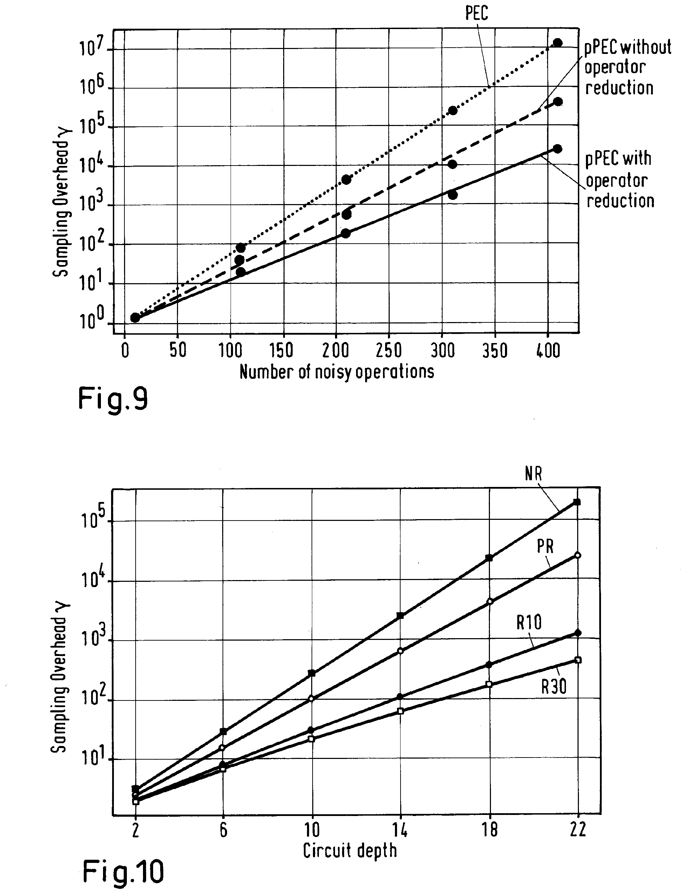

Fig. 9 shows an exemplary distribution of a sampling overhead y obtained by calculating the expected $\gamma$-factors for scenario in which the global inverse noise channel was calculated for a sample of random 20-qubit Clifford circuits for an increasing number of noisy two-qubit operations. Again, the results of the classical PEC scheme are indicated by a dotted line, the results of the pPEC scheme without an operator reduction by a dashed line and the results of the pPEC scheme with an operator reduction by a solid line. Since the sampling-overhead y scales exponentially in the number of noisy operations, the data is plotted logarithmically. As can be seen, the proposed pPEC scheme achieves a far more favorable scaling which can be further decreased with the operator reduction.

Fig. 10 shows an exemplary distribution of a sampling overhead y. The results were obtained based on gate-specific noise channels modeled according to a Sparse-Pauli-Lindbladian model and by simulating a device with a linear qubit topology and 10 qubits. As a noise model, a homogenous Pauli noise was considered by choosing the coefficients $w_k$ to be all equal. The weights $w_k$ where further chosen in accordance to the highest reported Pauli fidelity reported in the document Ewout van den Berg et al. "Probabilistic error cancellation with sparse Pauli-Lindblad models on noisy quantum processors" (see above), fmax ≈ 0.996, by utilizing $w_k = \frac{1+f_k}{2}$ where $f_k$ is the measured Pauli fidelity for Pauli operation $P_k$.

In Fig. 10, the line NR visualizes results in a scenario in which no term reduction was applied to the fused inverse noise channel according to formula 15. The line PR visualizes results in a scenario in which the aforementioned passive reduction was performed. The lines R10 and R30 each visualize results in scenarios in which the fused inverse noise channel according to formula 15 10 or 30 terms were reduced by 10 or 30 terms, respectively. Fig. 10 shows a clearly favorable scaling relative to the direct PEC scheme, even for modest depths and number of expanded channels.

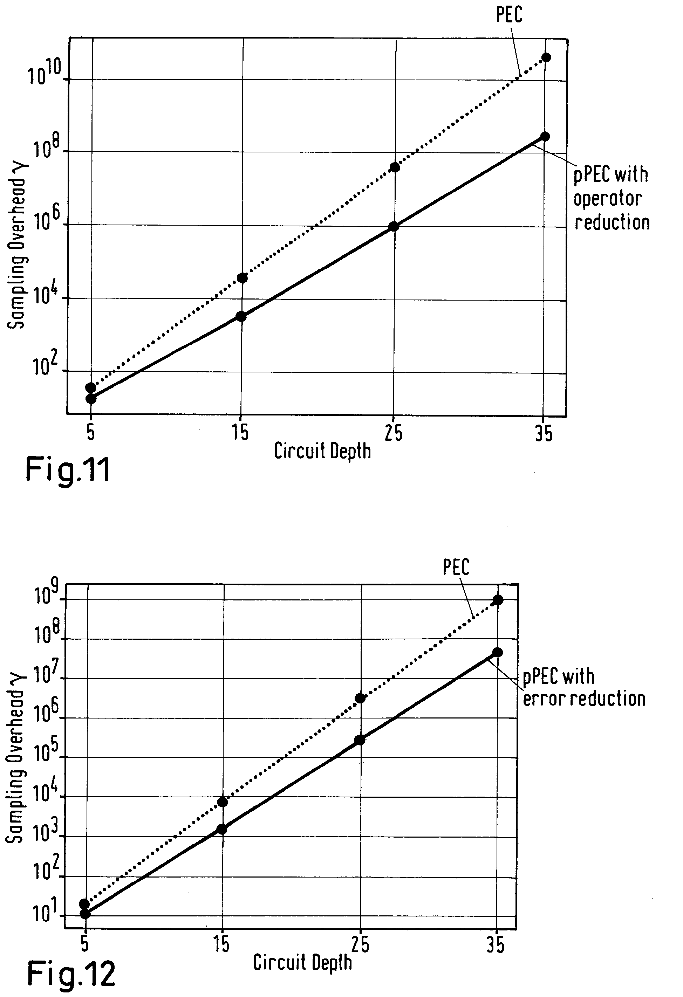

Fig. 11 and Fig. 12 show an exemplary distribution of a sampling overhead y for quantum computing circuits with higher qubit numbers. The results were obtained by simulating random quantum circuits with 30 qubits (Fig. 11) or 50 qubits (Fig. 12) and with an average Pauli fidelity of $f_k$ = 0.998. Again, gate-specific noise channels were modeled according to a Sparse-Pauli-Lindbladian model. The results show that a pPEC scheme can be applied to higher qubits counts while still resulting in noticeable reductions of the sampling overhead compared to a classical PEC scheme.

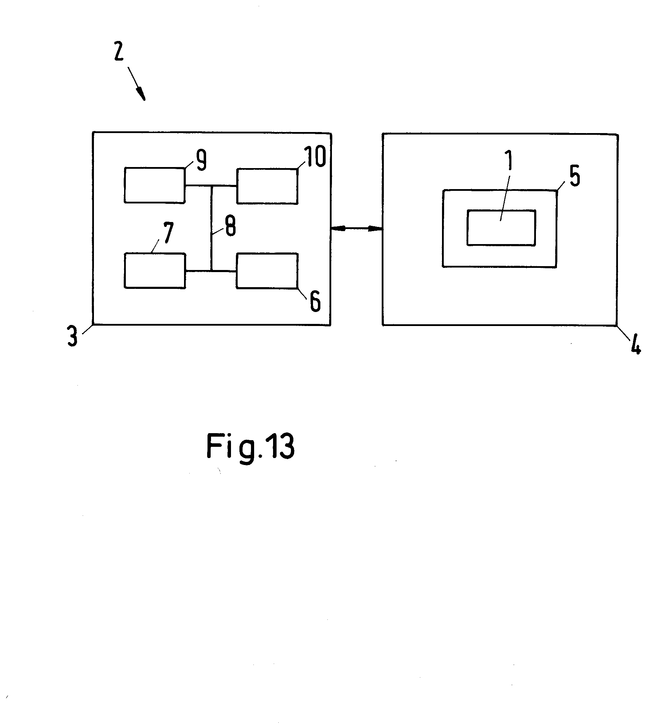

Fig. 13 shows a schematic block diagram of a quantum computer system 2. The quantum computer system 2 comprises a classical system 3 and a quantum system 4 and can therefore be a so-called hybrid system. The quantum system 4 can comprise at least a quantum processor 5 having a quantum circuit 1 comprising at least one or more qubits and/or being designed to execute this quantum circuit 1. The classical system 3, which can also be referred to as co-processor, can comprise one or more components, such as a memory 6, a processor 7, a bus system 8, a noise modeling component 9 and/or an insertion component 10. The processor 7, the noise modeling component 9 and/or an insertion component 10 can be provided by a single calculation unit or separate calculation units, wherein a calculation unit can be or comprise a microcontroller or an integrated circuit.

By means of the noise modeling component 9 a fused inverse noise channel $\widetilde{\Lambda}^{-1}_{fused}$ can be determined. The noise modeling component 9 can e.g. perform the calculations required for the propagation of gate-specific inverse noise channels $\Lambda_1^{-1}, \Lambda_2^{-1}, ..., \Lambda_L^{-1}$ (see Fig. 4a) to a predetermined circuit section and for offsetting these propagated gate-specific inverse noise channels $\widetilde{\Lambda}_l^{-1}$ to form the fused inverse noise channel $\widetilde{\Lambda}_{fused}^{-1}$.

Further, the noise modeling component 9 can determine the gate-specific inverse noise channels $\Lambda_1^{-1}, \Lambda_2^{-1}, ..., \Lambda_L^{-1}$ from predetermined gate-specific noise channels $\Lambda_l$. These predetermined gate-specific noise channels $\Lambda_l$, in particular a mathematical representation thereof, can e.g. be stored in the memory 6. It is, however, also possible that the gate-specific inverse noise channels $\Lambda_1^{-1}, \Lambda_2^{-1}, ..., \Lambda_L^{-1}$, in particular a mathematical representation thereof, can be stored in the memory 6 and/or that gate-specific noise channels $\Lambda_l$ are also determined by the noise modeling component 9. In the latter case, the noise modeling component can also perform a noise shaping such as twirling. Further, the noise modeling component 9 can also sample from the fused inverse noise channel $\widetilde{\Lambda}_{fused}^{-1}$. The insertion component 10 can then insert one such sample into the quantum system 4 in order to modifying the signal processing by the quantum computing circuit 1 according to the sample.

The quantum system 2 can execute circuit instances augmented with samples from the fused inverse noise model.

The quantum computer system 2 can further comprise a read-out component, a scheduler component, a measurement component, a shifting component, a quantum operation component.

The quantum system 4 can be separate from, but function in combination with, the classical system 3. Components of the quantum computer system 2 can be comprised by the classical system 3 or the quantum system 4. It is e.g. possible that one or more components of the quantum system 4, such as a readout component, can be at least partially comprised by the classical system 3 or otherwise comprised external to the quantum system 4. One or more components of the classical system 3, such as a mapping component, a scheduler component or a measurement component can be at least partially comprised by the quantum system 3, or otherwise comprised external to the classical system 3.

**Claims**

1. A method for noise-reduced signal processing by a quantum computing circuit (1) having at least two quantum gates ( $\tilde{\mathcal{U}}_1, \tilde{\mathcal{U}}_2, ..., \tilde{\mathcal{U}}_L$ ,), comprising the steps of,

    a) determining a fused inverse noise channel by propagating selected or all predetermined gate-specific inverse noise channels ( $\Lambda_1^{-1}, \Lambda_2^{-1}, ..., \Lambda_L^{-1}$ ) to a predetermined circuit section of the quantum computing circuit (1) as a function of each noisy gate operation of the gates ( $\tilde{\mathcal{U}}_1, \tilde{\mathcal{U}}_2, ..., \tilde{\mathcal{U}}_L$ ,) between the gate-specific inverse noise channel ( $\Lambda_1^{-1}, \Lambda_2^{-1}, ..., \Lambda_L^{-1}$ ) and the predetermined circuit section,

    b) modifying the signal processing by the quantum computing circuit (1) by adding an additional quantum computing operation at the predetermined circuit section according to the fused inverse noise channel.

2. The method according to claim 1, **characterized in that** the predetermined section is the start or end of the quantum computing circuit (1).

3. The method according to one of the preceding claims, **characterized in that** a gate-specific noise channel ( $\Lambda_1^{-1}, \Lambda_2^{-1}, ..., \Lambda_L^{-1}$ ) is modelled as Pauli noise channel.

4. The method according to one of the preceding claims, **characterized in that** propagating comprises

    a) determining a gate-specific part of the fused inverse noise channel by applying a sequence of gate-specific conjugation operations for each gate arranged between the respective gate-specific inverse noise channel ( $\Lambda_1^{-1}, \Lambda_2^{-1}, ..., \Lambda_L^{-1}$ ) and the predetermined circuit section,

b) offsetting the gate-specific parts.

5. The method according to claim 4, **characterized in that** an operator reduction is performed for the fused inverse noise channel.

6. The method according to one of the preceding claims, **characterized in that** the fused inverse noise channel is determined by additional considering a read-out error.

7. The method according to claim 6, **characterized in that** a measurement error channel is constructed and its inverse ($\Lambda_e^{-1}$) is propagated.

8. The method according to claim 7, **characterized in that** constructing the measurement error channel comprises

   a) determining an assignment matrix which correlates ideal measurements with noisy measurements,
   b) symmetrizing the assignment matrix,

9. The method according to one of the preceding claims, **characterized in that** a Monte-Carlo-simulation is performed to determine the fused inverse noise channel.

10. The method according to one of the preceding claims, **characterized in that** the gate-specific noise channels ($\Lambda_1$, $\Lambda_2$, ..., $\Lambda_L$) are modelled according to a Sparse-Pauli-Lindbladian model.

11. A quantum computer system comprising a quantum computing circuit (1) with at least two gates ($\tilde{\mathcal{U}}_1, \tilde{\mathcal{U}}_2, ..., \tilde{\mathcal{U}}_{L}$) and means for modifying the quantum computing circuit at a predetermined circuit section according to a fused inverse noise channel.

Fig.1

Fig.2

Fig.3

State of the art
Fig.4a

Fig.4b

Fig.4c

Fig.5a

Fig.5b

State of the art
# Fig.6

# Fig.7

# Fig.8

Fig.9

Fig.10

PEC

$10^{10}$

$10^8$

Sampling Overhead γ

$10^6$

pPEC with
operator
reduction

$10^4$

$10^2$

5    15    25    35
Circuit Depth

# Fig.11

PEC

$10^9$

$10^8$

Sampling Overhead γ

$10^7$

$10^6$

pPEC with
error reduction

$10^5$

$10^4$

$10^3$

$10^2$

$10^1$

5    15    25    35
Circuit Depth

# Fig.12

Fig.13

## EUROPEAN SEARCH REPORT

**Application Number**

EP 24 21 1653

### DOCUMENTS CONSIDERED TO BE RELEVANT

| Category | Citation of document with indication, where appropriate, of relevant passages | Relevant to claim |
|---|---|---|
| X | EWOUT VAN DEN BERG ET AL: "Probabilistic error cancellation with sparse Pauli-Lindblad models on noisy quantum processors", ARXIV.ORG, CORNELL UNIVERSITY LIBRARY, 201 OLIN LIBRARY CORNELL UNIVERSITY ITHACA, NY 14853, 24 January 2022 (2022-01-24), XP091139832, * page 4 - page 7; figure 1 * | 1-11 |
| A | VIJAYANANDA MOHIRE: "Stabilizer Codes and Quantum Error Correction", IEEE DRAFT WGDS; 958633597311, IEEE-SA IMEET CENTRAL, PISCATAWAY, NJ USA , vol. 2995 13 May 2022 (2022-05-13), pages 1-122, XP068274383, Retrieved from the Internet: URL:https://ieee-sa.imeetcentral.com/p/aQAAAAE81Qa [retrieved on 2022-05-17] * paragraphs [0005], [0001] * | 1-11 |

**CLASSIFICATION OF THE APPLICATION (IPC)**

INV.
G06N10/20
G06N10/70

**TECHNICAL FIELDS SEARCHED (IPC)**

G06N

The present search report has been drawn up for all claims

| Place of search | Date of completion of the search | Examiner |
|---|---|---|
| The Hague | 8 April 2025 | Falco, Gabriele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

**Patent documents cited in the description**

- US 20240152795 A1

**Non-patent literature cited in the description**

- **R. TAKAGI et al.** Fundamental limits of quantum error mitigation. *npj Quantum Information*, 2022, vol. 8, 114, https://doi.org/10.1038/s41534-022-00619-z
- **K. TEMME et al.** Error mitigation for short-depth quantum circuits. *IBM T.J. Watson Research Center*, 07 November 2017
- Practical Quantum Error Mitigation for Near-Future Applications. **SUGURU ENDO et al.** 1 Department of Materials. University of Oxford
- **EWOUT VAN DEN BERG et al.** Probabilistic error cancellation with sparse Pauli-Lindblad models on noisy quantum processors. *Nature Physics*, August 2023, vol. 19, 1116-1121, https://doi.org/10.1038/s41567-023-02042-2
- **ALEXANDER ERHARD et al.** Characterizing large-scale quantum computers via cycle benchmarking. *NATURE COMMUNICATIONS*, 2019, vol. 10, 5347, https://doi.org/10.1038/s41467-019-13068-7
- **EWOUT VAN DEN BERG et al.** *Probabilistic error cancellation with sparse Pauli-Lindblad models on noisy quantum processors*
- Mitigating measurement errors in multi-qubit experiments. **BRAVYI et al.** IBM Quantum. T. J. Watson Research Center, 01 July 2020